(19)

Europäisches Patentamt
European Patent Office
Office européen des brevets

(11) EP 1 848 243 B1

(12) **EUROPEAN PATENT SPECIFICATION**

(45) Date of publication and mention
of the grant of the patent:
**18.02.2009 Bulletin 2009/08**

(51) Int Cl.:
*H04R 3/02* (2006.01)    *H04M 9/08* (2006.01)

(21) Application number: **06008006.6**

(22) Date of filing: **18.04.2006**

(54) **Multi-channel echo compensation system and method**

System und Verfahren zur Mehrkanal-Echokompensation

Système et procédé pour suppression d'echo multivoies

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**24.10.2007 Bulletin 2007/43**

(73) Proprietor: **Harman Becker Automotive Systems GmbH
76307 Karlsbad (DE)**

(72) Inventors:
• **Buck, Markus, Dr.
88400 - Biberach (DE)**
• **Haulick, Tim
89143 - Blaubeuren (DE)**
• **Rössler, Martin
89077 - Ulm (DE)**
• **Schmidt, Gerhard
89081 - Ulm (DE)**

(74) Representative: **Grünecker, Kinkeldey, Stockmair & Schwanhäusser
Anwaltssozietät
Leopoldstrasse 4
80802 München (DE)**

(56) References cited:
**EP-A- 1 406 397        US-A1- 2005 213 747
US-B1- 6 738 480**

• **JACOB BENESTY ET AL: "A Hybrid Mono/Stereo Acoustic Echo Canceler" September 1998 (1998-09), IEEE TRANSACTIONS ON SPEECH AND AUDIO PROCESSING, IEEE SERVICE CENTER, NEW YORK, NY, US , XP011054323 ISSN: 1063-6676 * the whole document ***

EP 1 848 243 B1

**Description**

The invention is directed to a multi-channel echo compensation system and method, in particular, to compensate for echoes that are present in a microphone signal and result from a multi-channel source.

The presence of echoes in a microphone signal is a problem occurring in different kinds of communication systems. A typical example is a hands-free telephony system in a vehicular cabin. Such a telephony system usually comprises one or more microphones to acquire speech signals from a speaker. However, some loudspeakers are mounted in the vehicular cabin as well. Via these loudspeakers, signals, from a radio or a CD player, for example, are output. These signals are also acquired by the microphones of the hands-free telephony system resulting in a distortion of the microphone signal.

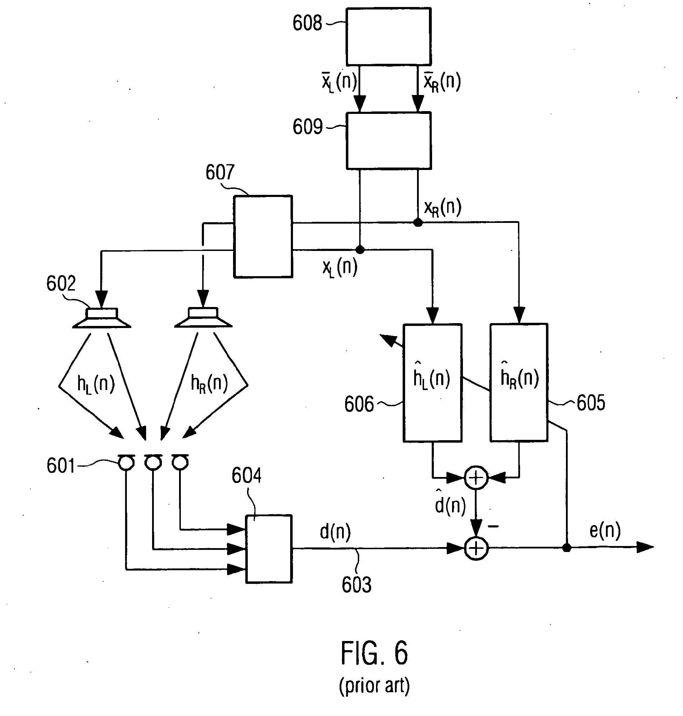

In order to compensate for these unwanted signals, adaptive filters are used to provide a compensating signal corresponding to the unwanted signals contained in the microphone signal. For this, the adaptive filters use the input signals of the loudspeakers to determine a compensation signal that will be subtracted from the microphone signal. The structure of a conventional echo compensation system is illustrated in Fig. 6.

In the system illustrated in this figure, three microphones 601 are provided to acquire, first of all, speech signals from a speaker. However, these microphones also acquire audio signals coming from loudspeakers 602. On the microphone output channel 603 connected to the microphones, a beam-forming means 604 is provided to combine the microphone output signals in a suitable way.

The signals $h_L(n)$ and $h_R(n)$ acquired by the microphone array are imitated by adaptive compensation filters 605 and 606. These adaptive filters use the loudspeaker input signals $x_L(n)$ and $x_R(n)$ (which can possibly be amplified in an amplifier 607) to provide a compensation signal $\hat{d}(n)$ which comes as close as possible to the loudspeaker signal acquired by the microphones (which is denoted by $d(n)$). By subtracting the compensation signal from the microphone signal, the portion in the microphone signal stemming from the loudspeaker is removed and the resulting signal $e(n)$ becomes minimal.

When compensating signals stemming from a car radio 608, there is the problem that the absolute value squared of the coherence

$$C(\Omega) = \left| \frac{S_{x_L x_R}(\Omega)}{\sqrt{S_{x_L x_L}(\Omega) S_{x_R x_R}(\Omega)}} \right|^2$$

can vary a lot. In particular, in the case of music signals, the coherence is very small, whereas in the case of news or interviews, the signals $x_L(n)$ and $x_R(n)$ are (almost) linearly dependent and the coherence approximately equals 1. In the above equation, $S_{x_L x_R}(\Omega)$, $S_{x_L x_L}(\Omega)$ and $S_{x_R x_R}(\Omega)$ denote the cross-power spectral density and the auto-power spectral densities, respectively, of the signals $x_L(n)$ and $x_R(n)$. If the coherence is very high, i.e. if the two signals are almost linearly dependent, the cost functions used in multi-channel adaptation algorithms do not have a unique solution. This has the consequence that, for example in the case of an interview, after a change of the speaker, the filters have to be balanced anew such that echoes occur again for a short time.

Other examples in which echoes are distorting a microphone signal are a hands-free system that is provided to control devices such as a car radio or a system for passenger communication in a vehicular cabin.

During the past years, many efforts have been made to solve the above problem. According to one proposal, a non-linear pre-processing is performed on the radio signals which is indicated in Fig. 6 by a corresponding pre-processing means 609. A possible non-linear pre-processing may consist of the addition of a half-wave rectifier (see for example, J. Benesty, T. Gänsler, D. R. Morgan, M. M. Sondhi, S. L. Gay, Advances in Network and Acoustic Echo Cancellation, Springer Verlag, Berlin, 2001). Another possibility is a time variant pre-filtering as disclosed in A. Sugiyama, Y. Joncour, A. Hirano, A Stereo Echo Canceller with Correct Echo-Path Identification Based on an Input-Sliding Technique, IEEE Transactions on Signal Processing, Vol. 49, Nr. 1, Pages 2577-2587, 2001.

The United States patent US-B1-6 738 480 discloses a hybrid technique allowing an appropriate echo cancellation scheme, mono or stereo, to be adapted on a dynamic basis.

It is a drawback of these methods that the signals on their path from the signal source (i.e. the car radio) to the loudspeakers are modified resulting in audible artefacts.

In view of the above-mentioned drawback of the prior art, it is the problem underlying the present invention to provide a multi-channel echo compensation system with improved echo compensation. This problem is solved by a system according to claim 1 and a method according to claim 17.

Accordingly, the invention provides a multi-channel echo compensation system, comprising:

two loudspeaker input channels, each loudspeaker input channel being connected to a loudspeaker for providing a loudspeaker input signal to be emanated by the loudspeaker,

a microphone output channel being connected to at least one microphone for receiving a microphone output signal from the at least one microphone, wherein each microphone is configured to acquire a signal emanating from the loudspeakers,

a compensation channel for each loudspeaker input channel, each compensation channel connecting a respective loudspeaker input channel and the microphone output channel,

an adaptive compensation filter for each compensation channel, wherein each adaptive compensation filter is configured to filter a signal on the respective compensation channel such that a compensation output signal is provided to compensate a microphone output signal for a signal emanating from the loudspeakers,

a pre-processing means for pre-processing loudspeaker input signals on the compensation channels, the pre-processing means being configured to determine a correlation value of the loudspeaker input signals for the two loudspeakers according to a pre-determined criterion and to de-activate one of the adaptive compensation filters if the determined correlation value passes a pre-determined threshold.

By de-activating one of the adaptive compensation filters, the above-mentioned problem of a non-unique solution of the adaptation process is overcome.

The pre-determined criterion to determine a correlation value can have different forms. For example, the correlation value can be determined as the coherence value. In this case, for example, the threshold can be selected to be 0.97. If the coherence value is greater than or equal to this value, the signals on the different input channels are considered to be highly correlated so that the adaptive filtering to provide a compensation signal can be performed with only one filter.

The multi-channel echo compensation system according to the invention has the further advantage that the required computing power can be reduced considerably in the case of highly correlated signals on different input channels. In particular, in the case of exactly two loudspeakers, i.e. a stereo system, the computing power required to perform the adaptive filtering and the update of the filters can be reduced by 50%.

The above multi-channel echo compensation system can be concerned with the case of exactly two loudspeakers or more than two loudspeakers. In the latter case, a corresponding number of loudspeaker input channels, compensation channels, and adaptive compensation filters is provided. Then, if a correlation value is determined for two of the loudspeaker input channels which passes the pre-determined threshold, all but one of the adaptive compensation filters can be de-activated.

The pre-processing means can be configured to provide a linear combination, particularly a difference and/or a sum, of signals of the two loudspeaker input channels to at least one of the adaptive compensation filters.

Linear combinations of signals, particularly differences of signals, allow to detect correlations between the signals in a very simple way.

In particular, the pre-processing means can be configured to provide a sum of the signals of the two loudspeaker input channels to a first of the adaptive compensation filters and a difference of the signals of the two second loudspeaker input channels to a second of the adaptive compensation filters.

In this way, if the signals of the first and the second loudspeaker input channel are highly correlated (for example, if the signal to be output by the loudspeaker is a mono-signal), the difference signal is very small or even zero. Therefore, it can be easily determined whether the two input signals are correlated or not.

In this case, in particular, the pre-processing means can be configured to de-activate the second of the adaptive compensation filters if the determined correlation value passes the pre-determined threshold.

The pre-processing means can be configured to determine a correlation value according to a pre-determined criterion based on the signal power of a signal, in particular, representing the difference and/or the sum of the signals of the two loudspeaker input channels.

If the input signals are highly correlated, the difference of these signals has almost vanishing power. In particular, the signal power can be determined as the norm of a corresponding signal vector; thus, a very good indication of the correlation between the two signals is obtained.

In the above multi-channel echo compensation system, the correlation value can be determined recursively. This reduces the required computing power to determine the correlation value. For example, if the signal vectors have a length N, the squared norm of this vector at time n equals the squared norm of the vector at time n-1 plus the n-th value squared of the signal vector minus the (n-N)-th value squared of the signal vector.

Each adaptive compensation filter can be configured such that no adaptation of the adaptive compensation filter is performed if the adaptive compensation filter is de-activated. Such a configuration of the adaptive compensation filters further reduces the required computing power and increases the stability of the filters.

In the above-described multi-channel echo compensation systems, the pre-processing means can comprise:

two inputs, each input being connected to a respective loudspeaker input channel,

two outputs, each output being connected to a respective adaptive compensation filter,

a first signal path connecting the first input and the first output and a second signal path connecting the second input and the second output,

a subtracting means on the first signal path and a summing means on the second signal path,

a third signal path connecting the first input and the summing means such that a signal on the first signal path and a signal on the second signal path are summed to obtain a summed signal,

and a fourth signal path connecting the second input and the subtracting means such that a signal on the first signal path and a signal on the second signal path are subtracted from each other to obtain a subtracted signal.

This is a very advantageous implementation of a multi-channel echo compensation system. In particular, if the signals on the two loudspeaker input channels are highly correlated, the signal power of the subtracted signal will be very low. On the other hand, in this case, the summed signal will have a signal power which essentially corresponds to twice the signal power of the respective signals in the loudspeaker input channels. If the signal power of the subtracted signal is below a pre-determined threshold, this is a criterion to determine that the correlation is very high. Then, the adaptive filter being connected to the first output of the pre-processing means can be de-activated. The compensation of the microphone output signal can be based on the summed signal only which is input into the corresponding adaptive compensation filter.

The pre-processing means can comprise a multiplying means on the first and/or the second signal path to multiply a signal on the first and/or on the second signal path by a weighting factor, in particular, to multiply the subtracted signal and the summed signal by a common weighting factor.

In this way, one can take into account that the signals after summation or subtraction are a superposition of different signals. In particular, if the signals on a first and a second loudspeaker input channel are highly correlated and summed in the pre-processing means, the corresponding summed signal corresponds to the signal on one of the loudspeaker input channels, but with twice the signal power. In that case, multiplying the summed signal by a factor of 0.5 leads to a resulting signal which essentially corresponds to the signal of one of the loudspeaker input channels.

The pre-processing means can comprise a first adaptive pre-processing filter on the third signal path, the adaptation of which is based on the difference between the signals on the second and on the third signal path, and a second adaptive pre-processing filter on the fourth signal path, the adaptation of which is based on the difference between the signals on the first and on the fourth signal path.

When playing back an interview on a stereo channel system, for example, the two speakers are often placed on different sides in an acoustic way. In other words, one speaker is more present on a first channel, whereas the other speaker is more present on a second channel. In such a case, the speech signals on both loudspeaker input channels are still highly correlated, however, their difference would be non-zero. Providing adaptive pre-processing filters on the third and fourth signal paths is useful in overcoming this problem.

The adaptive compensation filters and the adaptive pre-processing filters can be configured such that the adaptation of the pre-processing filters is performed slower than the adaptation of the compensation filters.

Such a configuration increases the stability of the system. In particular, the increments in the adaptation process of the pre-processing filters can be smaller than the increments in the adaptation process of the compensation filters.

The adaptation increments of the compensation filters can be larger than the adaptation increments of the pre-processing filters. In this way, the adaptation of the pre-processing filters will be slower than that of the compensation filters.

The pre-processing means can comprise a delay means on the first and on the second signal path, respectively, each delay means being configured to delay the signals on the first and on the second signal path before arriving at the summing means and subtracting means, respectively.

In this way, one overcomes the problem that the adaptive pre-processing filters do not necessarily converge towards a causal optimal solution.

In particular, the delay of the delay means can be selected such that it corresponds to about half of the length of a corresponding adaptive pre-processing filter. Then, about half of this adaptive pre-processing filter reproduces non-causal parts.

The previously described multi-channel echo compensation systems can comprise a summing means which is provided between the adaptive compensation filters and the microphone output channel and is configured to sum the signals emanating from the adaptive compensation filters.

In this way, an advantageous compensation signal for subtraction from the microphone output signal is provided.

The at least one microphone of the above multi-channel echo compensation systems can be configured as an array of at least two microphones being connected to a beam-forming means on the microphone output channel.

Such a configuration improves the signal to noise ratio in the microphone output channel. In particular, the beam-forming means yields a suitable directivity of the microphone array.

The invention also provides a method for compensating echoes in a multi-channel system, the multi-channel system comprising two loudspeakers, each loudspeaker being connected to a loudspeaker input channel for providing a loudspeaker input signal to be emanated by the loudspeaker, at least one microphone for acquiring a signal emanating from the loudspeakers, the at least one microphone being connected to a microphone output channel, a compensation channel for each loudspeaker input channel, each compensation channel connecting a respective loudspeaker input channel and the microphone output channel, an adaptive compensation filter for each compensation channel, wherein each adaptive compensation filter is configured to filter a signal on the respective compensation channel such that a compensation output signal is provided to compensate a microphone output signal for a signal emanating from the loudspeakers, the method comprising the steps of:

receiving loudspeaker input signals, wherein each loudspeaker input signal is received on a compensation channel,

pre-processing the loudspeaker input signals on the compensation channels, the pre-processing step comprising determining a correlation value of two loudspeaker signals for the two loudspeakers according to a pre-determined criterion and de-activating one of the adaptive compensation filters if the determined correlation value passes a pre-determined threshold.

The features and advantages described above in the context of the multi-channel echo compensation system apply to the case of the compensation method as well.

The pre-processing step can comprise providing a linear combination, particularly a difference and/or a sum, of signals of the two loudspeaker input channels to at least one of the adaptive compensation filters.

The pre-processing step can comprise providing a sum of the signals of the first and the second loudspeaker input channel to a first of the adaptive compensation filters and a difference of the signals of the first and second loudspeaker input channels to a second of the adaptive compensation filters.

The pre-processing step can comprise de-activating the second of the adaptive compensation filters if the determined correlation value passes the pre-determined threshold.

The pre-processing step can comprise determining a correlation value according to a pre-determined criterion based on the signal power of a signal, in particular, representing the difference and/or the sum of the signals of the two loudspeaker input channels.

In the above described methods, the correlation value can be determined recursively.

The pre-processing step can comprise summing the loudspeaker input signals on the two compensation input signals to obtain a summed signal and subtracting the loudspeaker input signals on the two compensation input signals to obtain a subtracted signal.

The pre-processing step can comprise multiplying the summed signal and the subtracted signal by a weighting factor, in particular, by a common weighting factor.

In the above methods, the pre-processing step can comprise:

adaptively filtering a loudspeaker signal of a first loudspeaker input channel before being added to a loudspeaker signal of a second loudspeaker channel, wherein the adaptation is based on the difference between the loudspeaker signals of the first and the second loudspeaker input channel, and

adaptively filtering a loudspeaker signal of a second loudspeaker input channel before being subtracted from a loudspeaker signal of a first loudspeaker channel, wherein the adaptation is based on the difference between the loudspeaker signals of the first and the second loudspeaker input channel.

In particular, the adaptively filtering of the pre-processing step can be performed slower than the adaptation of the adaptive compensation filters. For example, the adaptation increments of the compensation filters can be chosen to be larger than the adaptation increments of the adaptively filtering of the pre-processing step.

The pre-processing step can comprise:

delaying a loudspeaker signal of a second loudspeaker input channel before being added to an adaptively filtered loudspeaker signal of a first loudspeaker input channel,

delaying a loudspeaker signal of a first loudspeaker input channel before subtracting an adaptively filtered loudspeaker signal of a second loudspeaker input channel therefrom.

In particular, the delay can be selected such that it corresponds to about half of the length of a corresponding filter for adaptively filtering in the pre-processing step.

The above described methods can comprise the step of summing the signals emanating from the adaptive compensation filters.

The invention also provides a computer program product comprising one or more computer readable media having computer-executable instructions for performing the steps of the above described methods when run on a computer.

Further features and advantages of the invention will be described in the following with reference to the figures.

Fig. 1 illustrates the structure of a multi-channel echo compensation system;

Fig. 2 illustrates an example of the variation in time of a radio signal on two loudspeaker input channels;

Fig. 3 illustrates the variation in time of the sum and the difference of a radio signal;

Fig. 4 illustrates an example of the short time power spectrum of different signals;

Fig. 5 illustrates the structure of another multi-channel echo compensation system;

Fig. 6 illustrates the structure of a prior art multi-channel echo compensation system.

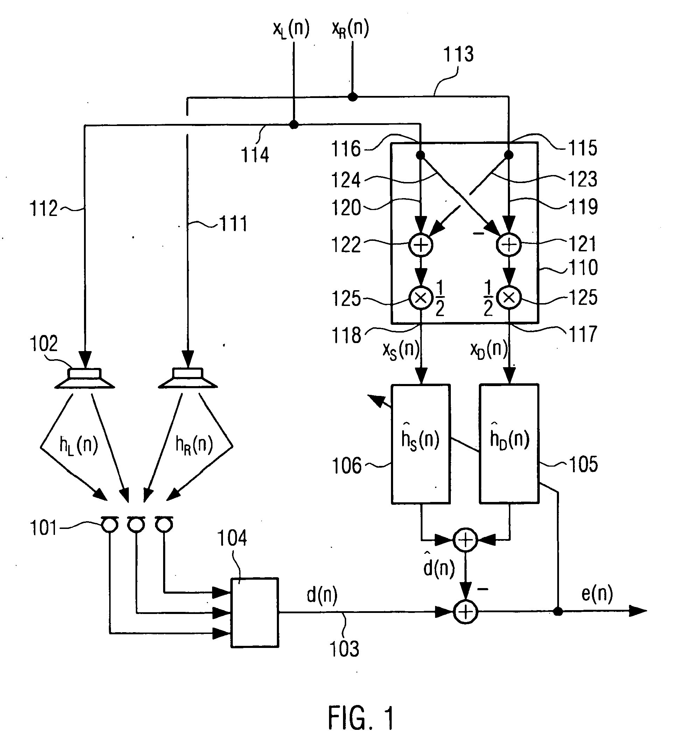

Fig. 1 illustrates schematically an embodiment of a multi-channel echo compensation system according to the present invention. In this example, a stereo signal source such as a car radio (not shown) outputs radio signals for a left loudspeaker channel $x_L(n)$ and for a right loudspeaker channel $x_R(n)$. These radio signals are emanated by two loudspeakers 102 and are acquired by a microphone array consisting of three microphones 101. The transmission from the loudspeakers to the microphones, for example, in a vehicular cabin, can be described by finite impulse responses:

$$\boldsymbol{h}_L(n) = \left[ h_{L,0}(n), h_{L,1}(n), \ldots, h_{L,L-1}(n) \right]^T$$

and

$$\boldsymbol{h}_R(n) = \left[ h_{R,0}(n), h_{R,1}(n), \ldots, h_{R,L-1}(n) \right]^T .$$

The variable n indicates the time dependence of the coefficients.

The signals acquired by the microphones 101 are output to a microphone output channel 103, on which a processing means 104 is provided. Such a processing means can perform a linear time invariant processing, for example, as it is done by a beam-former or a high-pass filter. The microphone output signal (in the example after the processing means 104) is denoted by $d(n)$.

The microphones are mainly used to acquire speech signals from a speaker, for example, for a hands-free telephony system or for a hands-free control system of specific devices. In view of this, it is desirable to reduce radio signal components in the microphone output signal $d(n)$. To reduce these components, two adaptive compensation filters 105 and 106 are provided, the impulse responses of which are given by

$$\hat{\boldsymbol{h}}_L(n) = \left[ \hat{h}_{L,0}(n), \hat{h}_{L,1}(n), \ldots, \hat{h}_{L,N-1}(n) \right]^T$$

and

$$\hat{h}_R(n) = \left[\hat{h}_{R,0}(n), \hat{h}_{R,1}(n), \ldots, \hat{h}_{R,N-1}(n)\right]^T.$$

In general, the order of the adaptive filters $N$ is smaller than the order of the impulse responses. As an example, 300 to 500 coefficients at a sampling rate of 11 kHz can be used for the adaptive filters. The adaptive filters are to provide a compensation signal that is to be subtracted from the microphone output signal $d(n)$. This results in a signal $e(n)$ which is sometimes called error signal and which has the form:

$$e(n) = d(n) - \sum_{i=0}^{N-1} \hat{h}_{L,i}(n) x_L(n-i) - \sum_{i=0}^{N-1} \hat{h}_{R,i}(n) x_R(n-i).$$

This output signal is used to adapt the adaptive compensation filters. The adaptation of the filters is to be performed in such a way that the estimated impulse response $\hat{h}_{L,i}(n)$ and $\hat{h}_{R,i}(n)$ are as close as possible to the real impulse responses $h_{L,i}(n)$ and $h_{R,i}(n)$ and that a high number of coefficients is estimated. The adaptation of the filters can be performed via the NLMS algorithm

In the example of Fig. 1, each loudspeaker input channel 111 and 112 is connected to the microphone output channel 103 by a corresponding compensation channel 113 and 114 such that each compensation channel receives a respective loudspeaker input signal. The pre-processing means 110 comprises two inputs 115 and 116, each input being connected to a respective loudspeaker input channel via a compensation channel. The pre-processing means 110 further comprises two outputs 117 and 118, these outputs being connected to the respective adaptive compensation filters 105 and 106.

Within the pre-processing means 110, there is a first signal path 119 connecting the first input 115 and the first output 117; furthermore, there is a second signal path connecting the second input 116 and the second output 118. On the first signal path 119, a subtracting means 121, and on the second signal path 120, a summing means 122, are provided.

A third signal path 123 connects the first input 115 and the summing means 122, whereas a fourth signal path 124 connects the second input 116 and the subtracting means 121. On the first and the second signal path, the summing and the subtracting means are followed by a multiplying means 125 to multiply the summed and the subtracted signals by a common weighting factor of 0.5. As a result, the following linear combinations of the loudspeaker input channels are emanating from the pre-processing means at the outputs 117 and 118:

$$x_s(n) = \frac{1}{2}\left[x_L(n) + x_R(n)\right],$$

$$x_D(n) = \frac{1}{2}\left[x_L(n) - x_R(n)\right]$$

In conventional signal processors, weighting with a factor of 0.5 can be realized by shifting the result in the accumulation register by one bit.

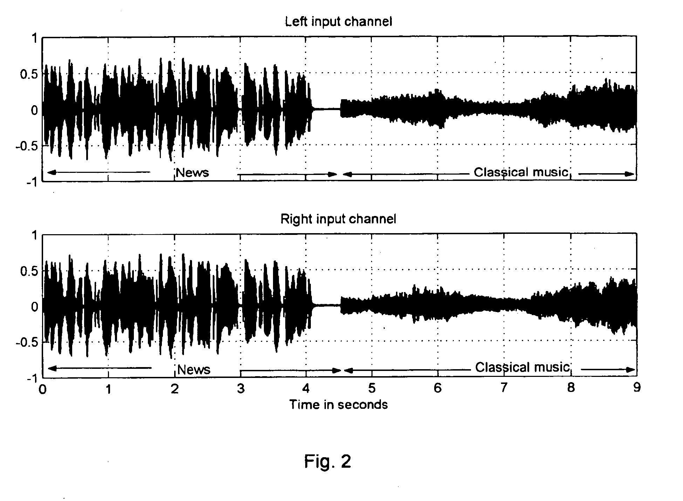

Fig. 2 shows the variation in time of a typical stereo radio signal. The upper graph corresponds to the left loudspeaker input channel and the lower graph to the right loudspeaker input channel. In the left part of each graph, the power spectrum for the playback of news is depicted; the right part corresponds to the playback of classical music.

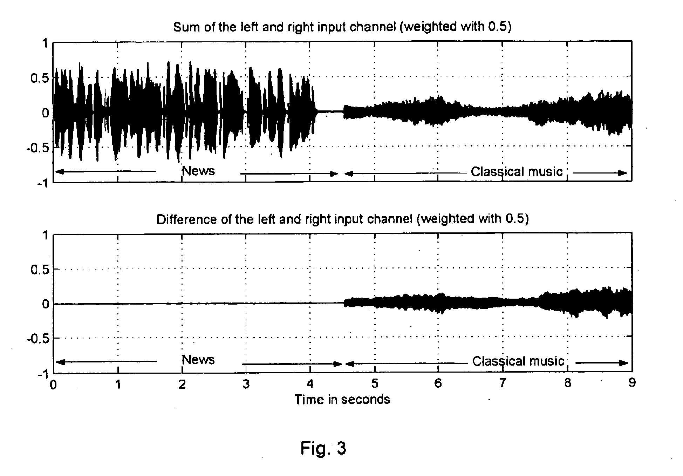

Fig. 3 illustrates the signals $x_s(n)$ and $x_D(n)$ corresponding to the signals of Fig. 2. The upper graph shows $x_s(n)$ weighted by a factor of 0.5 and the lower graph shows $x_D(n)$ weighted by a factor of 0.5. As a signal corresponding to the playback of news is usually a mono-signal, the difference signal $x_D(n)$ vanishes or at least almost vanishes during this time period. In the case of classical music, the summed signals and the subtracted signals differ only slightly from the original signals.

Returning to Fig. 1, as soon as the difference signal $x_D(n)$ has a power spectrum below a pre-determined threshold, the corresponding adaptive compensation filter 105 is de-activated. Then, no adaptation of this adaptive compensation filter is performed so that the computing power required to adapt the filters is halved. However, although only one of the adaptive compensation filters is activated, the resulting echo reduction is unaltered to a large degree.

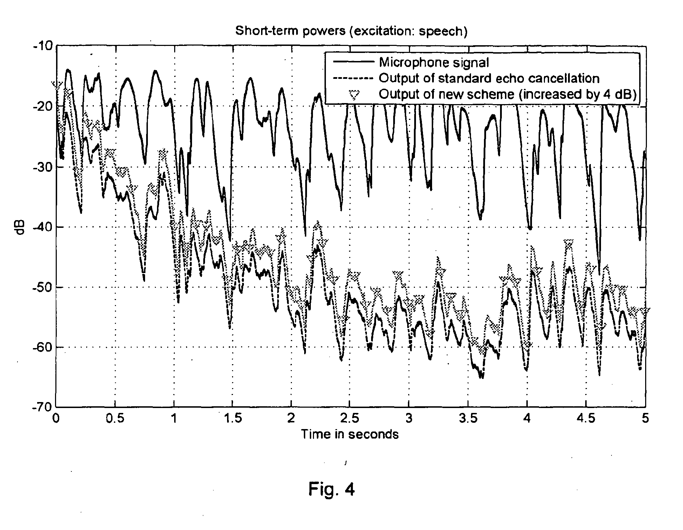

This is illustrated in Fig. 4. In this figure, the variation of a microphone output signal $d(n)$ in time without additional echo compensation is shown. Furthermore, an output signal $e(n)$, for which a conventional echo compensation as illustrated in Fig. 6 was performed, is depicted as a comparative example. Furthermore, the graph also shows the short time power of an output signal $e(n)$ for which an echo compensation according to Fig. 1 was performed. However, 4 dB were added to the values of this last curve for better illustration. In other words, without the additional 4 dB, the curves of the output signals with the conventional and the novel echo compensation method would be almost indistinguishable.

It is to be pointed out that, although the resulting echo compensation with the novel method is as good as the conventional method, the required computing power is significantly reduced. As can be seen, after some tuning, the radio signal can be reduced by approximately 30 dB.

In Fig. 1, the pre-processing means 110 and the adaptive filters 105 and 106 have been depicted as separate elements. Then, control of the adaptive filters by the pre-processing means, in particular, de-activation of one of the adaptive filters, has to be performed via a corresponding control connection (not shown). However, it is to be understood that checking whether a correlation value is below a pre-determined threshold can also be performed at the input of an adaptive filter; in this case, the pre-processing means would comprise part of the adaptive filter as well.

Determining a correlation value according to a pre-determined criterion can be performed by determining the squared norm, i.e. in the signal power, of the signal vector at the output of the pre-processing means or the input of the adaptive compensation filter. This can be done in a recursive way:

$$\left\| x_S(n) \right\|^2 = \left\| x_S(n-1) \right\|^2 + x_S^2(n) - x_S^2(n-N),$$

$$\left\| x_D(n) \right\|^2 = \left\| x_D(n-1) \right\|^2 + x_D^2(n) - x_D^2(n-N).$$

If the norm determined in this way falls below a pre-determined threshold, a corresponding release variable $a_S(n)$ and $a_D(n)$ can be set to zero:

$$a_S(n) = \begin{cases} 1, & if \ \left\| x_S(n) \right\|^2 > P_0, \\ 0, & else, \end{cases}$$

$$a_D(n) = \begin{cases} 1, & if \ \left\| x_D(n) \right\|^2 > P_0, \\ 0, & else. \end{cases}$$

The pre-determined threshold, for example, can be set to 0.03. Then, the determination of the output signal $e(n)$ after subtraction of the compensation signal is:

$$e(n) = d(n) - a_S(n) \sum_{i=0}^{N-1} \hat{h}_{S,i}(n) x_S(n-i) - a_D(n) \sum_{i=0}^{N-1} \hat{h}_{D,i}(n) x_D(n-i).$$

In this equation, the sums (corresponding to a convolution) are to be determined only if the corresponding release variable is non-zero. Correspondingly, the adaptation of the adaptive compensation filters is to be performed only under these circumstances:

$$\hat{h}_{S,i}(n+1) = \begin{cases} \hat{h}_{S,i}(n) + \mu \dfrac{x_S(n-i)e(n)}{\left\| x_S(n) \right\|^2 + \left\| x_D(n) \right\|^2}, & if \ a_S(n) = 1 \\ \hat{h}_{S,i}(n), & else \end{cases}$$

$$\hat{h}_{D,i}(n+1) = \begin{cases} \hat{h}_{D,i}(n) + \mu \dfrac{x_D(n-i)e(n)}{\|x_S(n)\|^2 + \|x_D(n)\|^2}, & if\ a_S(n) = 1 \\ \hat{h}_{D,i}(n), & else. \end{cases}$$

It is to be pointed out that the conventional echo compensation method according to Fig. 6 has the following convergence behavior for the adaptive compensation filters:

$$\hat{h}_L(n)\Big|_{E\{e^2(n)\}\to min} = h_L(n),$$

$$\hat{h}_R(n)\Big|_{E\{e^2(n)\}\to min} = h_R(n).$$

under the condition that the signals are not completely correlated. The novel echo compensation method according to Fig. 1 has the following convergence behavior, even if the input signals are fully correlated:

$$\hat{h}_S(n)\Big|_{E\{e^2(n)\}\to min} = h_L(n) + h_R(n),$$

$$\hat{h}_D(n)\Big|_{E\{e^2(n)\}\to min} = h_L(n) - h_R(n).$$

Thus, there is no non-uniqueness with the novel method.

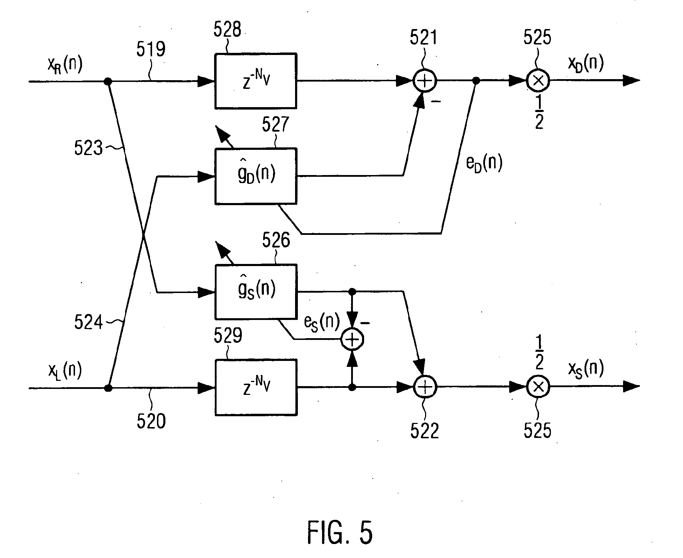

An extension of the multi-channel echo compensation system illustrated in Fig. 1 is depicted schematically in Fig. 5. In this figure, the structure of the corresponding pre-processing means is shown.

This embodiment is particularly useful if, in an interview, one of the speakers is (acoustically) placed to the left and the other to the right. This can be done by varying the amplification of the right and the left channel, by inserting delay time elements, or by a combination of both. In addition, further filters for amending the tone can be used.

In such a case, a modified pre-processing means as shown in Fig. 5 is advantageous. In this embodiment, the output signals of the pre-processing means have the form:

$$x_D(n) = \frac{1}{2}\left[ x_R(n-N_V) - \sum_{i=0}^{N_G} x_L(n-i)\hat{g}_{D,i}(n) \right],$$

$$x_S(n) = \frac{1}{2}\left[ x_L(n-N_V) + \sum_{i=0}^{N_G} x_R(n-i)\hat{g}_{S,i}(n) \right].$$

Here, additional adaptive pre-processing filters 526 and 527 are provided along the third signal path 523 and the fourth signal path 524, respectively. Furthermore, on the first signal path 519 and the second signal path 520, a delay means 528 and 529, respectively, is provided. These delay means are provided before the summing and the subtracting means in the direction of the signal flow.

The adaptation of the pre-processing filters 526 and 527 can be performed via the NLMS algorithm, as in the case of the compensation filters. First of all, the two error signals for the adaptation are determined as:

$$e_D(n) = 2x_D(n)$$

*and*

$$e_S(n) = x_L(n - N_V) - \sum_{i=0}^{N_G} x_R(n-i)\hat{g}_{S,i}(n).$$

Then, the filter adaptation is performed according to

$$\hat{g}_{D,i}(n+1) = \hat{g}_{D,i}(n) + \mu_G \frac{x_L(n-i)e_D(n)}{\displaystyle\sum_{p=0}^{N_G} x_L^2(n-p)},$$

$$\hat{g}_{S,i}(n+1) = \hat{g}_{S,i}(n) + \mu_G \frac{x_R(n-i)e_S(n)}{\displaystyle\sum_{p=0}^{N_G} x_R^2(n-p)}.$$

Preferably, the adaptation of the pre-processing filters 526 and 527 is performed slower than the adaptation of the compensation filters 105 and 106. This can be achieved, for example, by choosing smaller increments in the case of the adaptation of the pre-processing filters:

$$0 \le \mu_G << \mu \le 1.$$

As the filters 526 and 527 do not necessarily converge towards causal optimal solutions, the delay elements 528 and 529 can be configured in such a way that the delay times of $N_V$ cycles are selected that about half of the corresponding filter reproduce non-causal parts:

$$N_V \approx \frac{N_G}{2}.$$

In the case of a mono-signal ($x_L(n) = x_R(n)$), both filters converge to the optimal solutions with the transfer functions

$$\hat{G}_S(e^{j\Omega})\Big|_{E\{e_S^2(n)\}\to\min} = e^{-j\Omega N_V},$$

$$\hat{G}_D(e^{j\Omega})\Big|_{E\{e_D^2(n)\}\to\min} = e^{-j\Omega N_V}.$$

Then, the signals output by the pre-processing means have the form

$$x_S(n) = \frac{1}{2}\left[x_R(n - N_V) + x_L(n - N_V)\right],$$

$$x_D(n) = \frac{1}{2}\left[x_R(n - N_V) - x_L(n - N_V)\right]$$

Thus, except for a delay by $N_V$ cycles, the adaptive pre-processing of Fig. 5 corresponds to the fixed pre-processing shown in Fig. 1.

In the above examples, the multi-channel echo compensation system was described for the case of a two-channel, i.e. stereo, system. However, an extension to more than two channels is also possible. In this case, for example, the pre-processing means can be configured to de-activate all but one of the adaptive filters if a correlation value passes a pre-determined threshold.

**Claims**

1. Multi-channel echo compensation system, comprising:

    two loudspeaker input channels (111, 112), each loudspeaker input channel being connected to a loudspeaker for providing a loudspeaker input signal to be emanated by the loudspeaker,
    a microphone output channel (103) being connected to at least one microphone (101) for receiving a microphone output signal from the at least one microphone, wherein each microphone is configured to acquire a signal emanating from the loudspeakers,
    a compensation channel (113, 114) for each loudspeaker input channel, each compensation channel connecting a respective loudspeaker input channel and the microphone output channel,
    an adaptive compensation filter (105, 106) for each compensation channel, wherein each adaptive compensation filter is configured to filter a signal on the respective compensation channel such that a compensation output signal is provided to compensate a microphone output signal for a signal emanating from the loudspeakers,
    a pre-processing means (110) for pre-processing loudspeaker input signals on the compensation channels, the pre-processing means being configured to determine a correlation value of the loudspeaker input signals for the two loudspeakers according to a pre-determined criterion and to de-activate one of the adaptive compensation filters if the determined correlation value passes a pre-determined threshold.

2. Multi-channel echo compensation system according to claim 1, wherein the pre-processing means is configured to provide a linear combination, particularly a difference and/or a sum, of signals of the two loudspeaker input channels to at least one of the adaptive compensation filters.

3. Multi-channel echo compensation system according to claim 1 or 2, wherein the pre-processing means is configured to provide a sum of the signals of the two loudspeaker input channels to a first of the adaptive compensation filters and a difference of the signals of the two loudspeaker input channels to a second of the adaptive compensation filters.

4. Multi-channel echo compensation system according to claim 3, wherein the pre-processing means is configured to de-activate the second of the adaptive compensation filters if the determined correlation value passes the pre-determined threshold.

5. Multi-channel echo compensation system according to one of the preceding claims, wherein the pre-processing means is configured to determine a correlation value according to a pre-determined criterion based on the signal power of a signal, in particular, representing the difference and/or the sum of the signals of the two loudspeaker input channels.

6. Multi-channel echo compensation system according to one of the preceding claims, wherein the correlation value is determined recursively.

7. Multi-channel echo compensation system according to one of the preceding claims, wherein each adaptive compensation filter is configured such that no adaptation of the adaptive compensation filter is performed if the adaptive compensation filter is de-activated.

8. Multi-channel echo compensation system according to one of the preceding claims, wherein the pre-processing means comprises:

two inputs, each input being connected to a respective loudspeaker input channel,
two outputs, each output being connected to a respective adaptive compensation filter,
a first signal path connecting the first input and the first output and a second signal path connecting the second input and the second output,
a subtracting means on the first signal path and a summing means on the second signal path,
a third signal path connecting the first input and the summing means such that a signal on the first signal path and a signal on the second signal path are summed to obtain a summed signal,
and a fourth signal path connecting the second input and the subtracting means such that a signal on the first signal path and a signal on the second signal path are subtracted from each other to obtain a subtracted signal.

9. Multi-channel echo compensation system according to claim 8, wherein the pre-processing means comprises a multiplying means on the first and/or the second signal path to multiply a signal on the first and/or on the second signal path by a weighting factor, in particular, to multiply the subtracted signal and the summed signal by a common weighting factor.

10. Multi-channel echo compensation system according to claim 8 or 9, wherein the pre-processing means comprises:

a first adaptive pre-processing filter on the third signal path, the adaptation of which is based on the difference between the signals on the second and on the third signal path,
a second adaptive pre-processing filter on the fourth signal path the adaptation of which is based on the difference between the signals on the first and on the fourth signal path.

11. Multi-channel echo compensation system according to claim 10, wherein the adaptive compensation filters and the adaptive pre-processing filters are configured such that the adaptation of the pre-processing filters is performed slower than the adaptation of the compensation filters.

12. Multi-channel echo compensation system according to claim 11, wherein the adaptation increments of the compensation filters are larger than the adaptation increments of the pre-processing filters.

13. Multi-channel echo compensation system according to one of the claims 10 - 12, wherein the pre-processing means comprises a delay means on the first and on the second signal path, respectively, each delay means being configured to delay the signals on the first and second signal path before arriving at the summing means and subtracting means, respectively.

14. Multi-channel echo compensation system according to claim 13, wherein the delay of the delay means is selected such that it corresponds to about half of the length of a corresponding adaptive pre-processing filter.

15. Multi-channel echo compensation system according to one of the preceding claims, comprising a summing means which is provided between the adaptive compensation filters and the microphone output channel and is configured to sum the signals emanating from the adaptive compensation filters.

16. Multi-channel echo compensation system according to one of the preceding claims, wherein the at least one microphone is configured as an array of at least two microphones being connected to a beam-forming means on the microphone output channel.

17. Method for compensating echoes in a multi-channel system, the multi-channel system comprising two loudspeakers, each loudspeaker being connected to a loud-speaker input channel (111, 112) for providing a loudspeaker input signal to be emanated by the loudspeaker, at least one microphone (101) for acquiring a signal emanating from the loudspeakers, the at least one microphone (101) being connected to a microphone output channel (103), a compensation channel (113, 114) for each loudspeaker input channel, each compensation channel connecting a respective loudspeaker input channel and the microphone output channel, an adaptive compensation filter (105, 106) for each compensation channel, wherein each adaptive compensation filter (105, 106) is configured to filter a signal on the respective compensation channel such that a compensation output signal is provided to compensate a microphone output signal for a signal emanating from the loudspeakers, the method comprising the steps of:

receiving loudspeaker input signals, wherein each loudspeaker input signal is received on a compensation channel,
pre-processing (110) the loudspeaker input signals on the compensation channels, the pre-processing step comprising determining a correlation value of two loudspeaker signals for the two loudspeakers according to a pre-determined criterion and deactivating one of the adaptive compensation filters if the determined correlation value passes a pre-determined threshold.

18. Method according to claim 17, wherein the pre-processing step comprises providing a linear combination, particularly a difference and/or a sum, of signals of the two loudspeaker input channels to at least one of the adaptive compensation filters.

19. Method according to claim 17 or 18, wherein the pre-processing step comprises providing a sum of the signals of the first and the second loudspeaker input channel to a first of the adaptive compensation filters and a difference of the signals of the first and second loudspeaker input channels to a second of the adaptive compensation filters.

20. Method according to claim 19, wherein the pre-processing step comprises deactivating the second of the adaptive compensation filters if the determined correlation value passes the pre-determined threshold.

21. Method according to one of the claims 17 - 20, wherein the pre-processing step comprises determining a correlation value according to a pre-determined criterion based on the signal power of a signal, in particular, representing the difference and/or the sum of the signals of the two loudspeaker input channels.

22. Method according to one of the claims 17 - 21, wherein the correlation value is determined recursively.

23. Method according to one of the claims 17 - 22, wherein the pre-processing step comprises summing the loudspeaker input signals on the two compensation input signals to obtain a summed signal and subtracting the loudspeaker input signals on the two compensation input signals to obtain a subtracted signal.

24. Method according to claim 23, wherein the pre-processing step comprises multiplying the summed signal and the subtracted signal by a weighting factor, in particular, by a common weighting factor.

25. Method according to claim 23 or 24, wherein the pre-processing step comprises:

adaptively filtering a loudspeaker signal of a first loudspeaker input channel before being added to a loudspeaker signal of a second loudspeaker channel, wherein the adaptation is based on the difference between the loudspeaker signals of the first and the second loudspeaker input channel, and
adaptively filtering a loudspeaker signal of a second loudspeaker input channel before being subtracted from a loudspeaker signal of a first loudspeaker channel, wherein the adaptation is based on the difference between the loudspeaker signals of the first and the second loudspeaker input channel.

26. Method according to claim 25 wherein the adaptively filtering of the pre-processing step is performed slower than the adaptation of the adaptive compensation filters.

27. Method according to claim 26 wherein the adaptation increments of the compensation filters are chosen to be larger than the adaptation increments of the adaptively filtering of the pre-processing step.

28. Method according to one of the claims 25 - 27, wherein the pre-processing step comprises

delaying a loudspeaker signal of a second loudspeaker input channel before being added to an adaptively filtered loudspeaker signal of a first loudspeaker input channel,
delaying a loudspeaker signal of a first loudspeaker input channel before subtracting an adaptively filtered loudspeaker signal of a second loudspeaker input channel therefrom.

29. Method according to claim 28, wherein the delay is selected such that it corresponds to about half of the length of a corresponding filter for adaptively filtering in the pre-processing step.

30. Method according to one of the claims 17 - 29, comprising the step of summing the signals emanating from the adaptive compensation filters.

31. Computer program product comprising one or more computer readable media having computer-executable instructions addapted to perform all the steps of the method according to one of the claims 17 - 30 when run on a computer.

**Patentansprüche**

1. Mehrkanal-Echokompensationssystem, das umfasst:

  zwei Lautsprecher-Eingangskanäle (111, 112), wobei jeder Lautsprecher-Eingangskanal mit einem Lautsprecher verbunden ist, um ein Lautsprecher-Eingangssignal bereitzustellen, das durch den Lautsprecher ausgestrahlt wird,
  einen Mikrofon-Ausgangskanal (103), der mit wenigstens einem Mikrofon (101) verbunden ist, um ein Mikrofon-Ausgangssignal von dem wenigstens einen Mikrofon zu empfangen, wobei jedes Mikrofon so konfiguriert ist, dass es ein Signal erfasst, das von den Lautsprechern ausgestrahlt wird,
  einen Kompensationskanal (113, 114) für jeden Lautsprecher-Eingangskanal, wobei jeder Kompensationskanal einen entsprechenden Lautsprecher-Eingangskanal und den Mikrofon-Ausgangskanal verbindet,
  ein adaptives Kompensationsfilter (105, 106) für jeden Kompensationskanal, wobei jedes adaptive Kompensationsfilter so konfiguriert ist, dass es ein Signal auf dem jeweiligen Kompensationskanal so filtert, dass ein Kompensations-Ausgangssignal bereitgestellt wird, um ein Mikrofon-Ausgangssignal für ein Signal zu kompensieren, das von den Lautsprechern ausgestrahlt wird,
  eine Vorverarbeitungseinrichtung (110) zum Vorverarbeiten von Lautsprecher-Eingangssignalen auf den Kompensationskanälen, wobei die Vorverarbeitungseinrichtung so konfiguriert ist, dass sie einen Korrelationswert der Lautsprecher-Eingangssignale für die zwei Lautsprecher gemäß einem vorgegebenen Kriterium bestimmt und eines der adaptiven Kompensationsfilter deaktiviert, wenn der bestimmte Korrelationswert eine vorgegebene Schwelle überschreitet.

2. Mehrkanal-Echokompensationssystem nach Anspruch 1, wobei die Vorverarbeitungseinrichtung so konfiguriert ist, dass sie eine lineare Kombination, insbesondere eine Differenz und/oder Summe, von Signalen der zwei Lautsprecher-Eingangskanäle wenigstens einem der adaptiven Kompensationsfilter bereitstellt.

3. Mehrkanal-Echokompensationssystem nach Anspruch 1 oder 2, wobei die Vorverarbeitungseinrichtung so konfiguriert ist, dass sie eine Summe der Signale der zwei Lautsprecher-Eingangskanäle einem ersten der adaptiven Kompensationsfilter und eine Differenz der Signale der zwei Lautsprecher-Eingangskanäle einem zweiten der adaptiven Kompensationsfilter bereitstellt.

4. Mehrkanal-Echokompensationssystem nach Anspruch 3, wobei die Vorverarbeitungseinrichtung so konfiguriert ist, dass sie das zweite der adaptiven Kompensationsfilter deaktiviert, wenn der bestimmte Korrelationswert die vorgegebene Schwelle überschreitet.

5. Mehrkanal-Echokompensationssystem nach einem der vorangehenden Ansprüche, wobei die Vorverarbeitungseinrichtung so konfiguriert ist, dass sie einen Korrelationswert gemäß einem vorgegebenen Kriterium basierend auf der Signalleistung eines Signals bestimmt, der insbesondere die Differenz und/oder die Summe der Signale der zwei Lautsprecher-Eingangskanäle darstellt.

6. Mehrkanal-Echokompensationssystem nach einem der vorangehenden Ansprüche, wobei der Korrelationswert rekursiv bestimmt wird.

7. Mehrkanal-Echokompensationssystem nach einem der vorangehenden Ansprüche, wobei jedes der adaptiven Kompensationsfilter so konfiguriert ist, dass keine Adaption des adaptiven Kompensationsfilters durchgeführt wird, wenn das adaptive Kompensationsfilter deaktiviert ist.

8. Mehrkanal-Echokompensationssystem nach einem der vorangehenden Ansprüche, wobei die Vorverarbeitungseinrichtung umfasst:

  zwei Eingänge, wobei jeder Eingang mit einem entsprechenden Lautsprecher-Eingangskanal verbunden ist,
  zwei Ausgänge, die jeweils mit einem entsprechenden adaptiven Kompensationsfilter verbunden sind,
  einen ersten Signalweg, der den ersten Eingang und den ersten Ausgang verbindet, sowie einen zweiten Signalweg, der den zweiten Eingang und den zweiten Ausgang verbindet,
  eine Subtrahiereinrichtung auf dem ersten Signalweg und eine Summiereinrichtung auf dem zweiten Signalweg,
  einen dritten Signalweg, der den ersten Eingang und die Summiereinrichtung so verbindet, dass ein Signal auf dem ersten Signalweg und ein Signal auf dem zweiten Signalweg summiert werden, um ein summiertes Signal zu gewinnen,

und einen vierten Signalweg, der den zweiten Eingang und die Subtrahiereinrichtung so verbindet, dass ein Signal auf dem ersten Signalweg und ein Signal auf dem zweiten Signalweg voneinander subtrahiert werden, um ein subtrahiertes Signal zu gewinnen.

9. Mehrkanal-Echokompensationssystem nach Anspruch 8, wobei die Vorverarbeitungseinrichtung eine Multipliziereinrichtung auf dem ersten und/oder dem zweiten Signalweg umfasst, um ein Signal auf dem ersten und/oder auf dem zweiten Signalweg mit einem Gewichtungsfaktor zu multiplizieren, insbesondere um das subtrahierte Signal und das summierte Signal mit einem gemeinsamen Gewichtungsfaktor zu multiplizieren.

10. Mehrkanal-Echokompensationssystem nach Anspruch 8 oder 9, wobei die Vorverarbeitungseinrichtung umfasst:

ein erstes adaptives Vorverarbeitungsfilter auf dem dritten Signalweg, dessen Adaption auf der Differenz zwischen den Signalen auf dem zweiten und auf dem dritten Signalweg basiert, ein zweites adaptives Vorverarbeitungsfilter auf dem vierten Signalweg, dessen Adaption auf der Differenz zwischen den Signalen auf dem ersten und dem vierten Signalweg basiert.

11. Mehrkanal-Echokompensationssystem nach Anspruch 10, wobei die adaptiven Kompensationsfilter und die adaptiven Vorverarbeitungsfilter so konfiguriert sind, dass die Adaption der Vorverarbeitungsfilter langsamer durchgeführt wird als die Adaption der Kompensationsfilter.

12. Mehrkanal-Echokompensationssystem nach Anspruch 11, wobei die Adaptionsinkremente der Kompensationsfilter größer sind als die Adaptionsinkremente der Vorverarbeitungsfilter.

13. Mehrkanal-Echokompensationssystem nach einem der Ansprüche 10 - 12, wobei die Vorverarbeitungsrichtung eine Verzögerungseinrichtung auf dem ersten bzw. dem zweiten Signalweg umfasst und jede Verzögerungseinrichtung so konfiguriert ist, dass sie die Signale auf dem ersten und dem zweiten Signalweg verzögert, bevor sie die Summiereinrichtung bzw. die Subtrahiereinrichtung erreichen.

14. Mehrkanal-Echokompensationssystem nach Anspruch 13, wobei die Verzögerung der Verzögerungseinrichtung so ausgewählt wird, dass sie ungefähr der Hälfte der Länge eines entsprechenden adaptiven Vorverarbeitungsfilters entspricht.

15. Mehrkanal-Echokompensationssystem nach einem der vorangehenden Ansprüche, das eine Summiereinrichtung umfasst, die zwischen den adaptiven Kompensationsfiltern und dem Mikrofon-Ausgangssignal vorhanden ist und so konfiguriert ist, dass sie die Signale summiert, die von den adaptiven Kompensationsfiltern ausgestrahlt werden.

16. Mehrkanal-Echokompensationssystem nach einem der vorangehenden Ansprüche, wobei das wenigstens eine Mikrofon als eine Anordnung von wenigstens zwei Mikrofonen konfiguriert ist, die mit einer Strahlformeinrichtung an dem Mikrofon-Ausgangskanal verbunden sind.

17. Verfahren zum Kompensieren von Echos in einem Mehrkanalsystem, wobei das Mehrkanalsystem zwei Lautsprecher umfasst und jeder Lautsprecher mit einem Lautsprecher-Eingangskanal (111, 112) zum Bereitstellen eines Lautsprecher-Eingangssignals verbunden ist, das durch den Lautsprecher ausgestrahlt werden soll, wenigstens ein Mikrofon (101) zum Erfassen eines Signals, das von den Lautsprechern ausgestrahlt wird, wobei das wenigstens eine Mikrofon (101) mit einem Mikrofon-Ausgangskanal (103) verbunden ist, einen Kompensationskanal (113, 114) für jeden Lautsprecher-Eingangskanal, wobei jeder Kompensationskanal einen jeweiligen Lautsprecher-Eingangskanal und den Mikrofon-Ausgangskanal verbindet, ein adaptives Kompensationsfilter (105, 106) für jeden Kompensationskanal, wobei jedes adaptive Kompensationsfilter (105, 106) so konfiguriert ist, dass es ein Signal auf dem jeweiligen Kompensationskanal filtert, so dass ein Kompensations-Ausgangssignal bereitgestellt wird, um ein Mikrofon-Ausgangssignal bezüglich eines Signals zu kompensieren, das von den Lautsprechern ausgestrahlt wird, wobei das Verfahren die folgenden Schritte umfasst:

Empfangen von Lautsprecher-Eingangssignalen, wobei jedes Lautsprecher-Eingangssignal auf einem Kompensationskanal empfangen wird, Vorverarbeiten (110) der Lautsprecher-Eingangssignale auf den Kompensationskanälen, wobei der Vorverarbeitungsschritt Bestimmen eines Korrelationswertes zweier Lautsprechersignale für die zwei Lautsprecher gemäß einem vorgegebenen Kriterium und Deaktivieren eines der adaptiven Kompensationsfilter umfasst, wenn der bestimmte Korrelationswert eine vorgegebene Schwelle überschreitet.

18. Verfahren nach Anspruch 17, wobei der Vorverarbeitungsschritt Bereitstellen einer linearen Kombination, insbesondere einer Differenz und/oder einer Summe, von Signalen der zwei Lautsprecher-Eingangssignale für wenigstens eines der adaptiven Kompensationsfilter umfasst.

19. Verfahren nach Anspruch 17 oder 18, wobei der Vorverarbeitungsschritt Bereitstellen einer Summe der Signale des ersten und des zweiten Lautsprecher-Eingangskanals für ein erstes der adaptiven Kompensationsfilter und einer Differenz der Signale des ersten und des zweiten Lautsprecher-Eingangskanals für ein zweites der adaptiven Kompensationsfilter umfasst.

20. Verfahren nach Anspruch 19, wobei der Vorverarbeitungsschritt Deaktivieren des zweiten der adaptiven Kompensationsfilter umfasst, wenn der bestimmte Korrelationswert die vorgegebene Schwelle überschreitet.

21. Verfahren nach einem der Ansprüche 17 - 20, wobei der Vorverarbeitungsschritt Bestimmen eines Korrelationswertes entsprechend einem vorgegebenen Kriterium auf Basis der Signalleistung eines Signals, der insbesondere die Differenz und/oder die Summe der Signale der zwei Lautsprecher-Eingangskanäle darstellt, umfasst.

22. Verfahren nach einem der Ansprüche 17 - 21, wobei der Korrelationswert rekursiv bestimmt wird.

23. Verfahren nach einem der Ansprüche 17 - 22, wobei der Vorverarbeitungsschritt Summieren der Lautsprecher-Eingangssignale auf den zwei Kompensations-Eingangssignalen umfasst, um ein summiertes Signal zu gewinnen, und Subtrahieren der Lautsprecher-Eingangssignale auf den zwei Kompensations-Eingangssignalen umfasst, um ein subtrahiertes Signal zu gewinnen.

24. Verfahren nach Anspruch 23, wobei der Vorverarbeitungsschritt Multiplizieren des summierten Signals und des subtrahierten Signals mit einem Gewichtungsfaktor, insbesondere mit einem gemeinsamen Gewichtungsfaktor, umfasst.

25. Verfahren nach Anspruch 23 oder 24, wobei der Vorverarbeitungsschritt umfasst:

   adaptives Filtern eines Lautsprechersignals eines ersten Lautsprecher-Eingangskanals vor Addieren zu einem Lautsprechersignal eines zweiten Lautsprecherkanals, wobei die Adaption auf der Differenz zwischen den Lautsprechersignalen des ersten und des zweiten Lautsprecher-Eingangskanals basiert, und
   adaptives Filtern eines Lautsprechersignals eines zweiten Lautsprecher-Eingangskanals vor Subtrahieren von einem Lautsprechersignal eines ersten Lautsprecherkanals, wobei die Adaption auf der Differenz zwischen den Lautsprechersignalen des ersten und des zweiten Lautsprecher-Eingangskanals basiert.

26. Verfahren nach Anspruch 25, wobei das adaptive Filtern des Vorverarbeitungsschritts langsamer durchgeführt wird als die Adaption der adaptiven Kompensationsfilter.

27. Verfahren nach Anspruch 26, wobei die Adaptionsinkremente der Kompensationsfilter so gewählt werden, dass sie größer sind als die Adaptionsinkremente des adaptiven Filterns des Vorverarbeitungsschritts.

28. Verfahren nach einem der Ansprüche 25 - 27, wobei der Vorverarbeitungsschritt umfasst:

   Verzögern eines Lautsprechersignals eines zweiten Lautsprecher-Eingangskanals vor Addieren zu einem adaptiv gefilterten Lautsprechersignal eines ersten Lautsprecher-Eingangskanals,
   Verzögern eines Lautsprechersignals eines ersten Lautsprecher-Eingangskanals vor Subtrahieren eines adaptiv gefilterten Lautsprechersignals eines zweiten Lautsprecher-Eingangskanals von diesem.

29. Verfahren nach Anspruch 28, wobei die Verzögerung so ausgewählt wird, dass sie ungefähr der Hälfte der Länge eines entsprechenden Filters zum adaptiven Filtern in dem Vorverarbeitungsschritt entspricht.

30. Verfahren nach einem der Ansprüche 17 - 29, das den Schritt des Summierens der Signale umfasst, die von den adaptiven Kompensationsfiltern ausgestrahlt werden.

31. Computerprogrammerzeugnis, das ein oder mehrere computerlesbare Medium/Medien umfasst, das/die durch Computer ausführbare Befehle aufweist/aufweisen, die zum Durchführen aller der Schritte des Verfahrens nach einem der Ansprüche 17 - 30 beim Ausführen auf einem Computer eingerichtet sind.

**Revendications**

1. Système de compensation d'écho multicanal, comprenant:

    deux canaux d'entrée de haut-parleurs (111, 112), chaque canal d'entrée de haut-parleur étant connecté à un haut-parleur pour fournir un signal d'entrée de haut-parleur à délivrer par le haut-parleur,
    un canal de sortie de microphone (103) connecté à au moins un microphone (101) pour recevoir un signal de sortie de microphone dudit au moins un microphone, dans lequel chaque microphone est configuré pour acquérir un signal sortant des haut-parleurs,
    un canal de compensation (113, 114) pour chaque canal d'entrée de haut-parleur, chaque canal de compensation connectant un canal d'entrée de haut-parleur respectif et le canal de sortie de microphone,
    un filtre de compensation adaptatif (105, 106) pour chaque canal de compensation, dans lequel chaque filtre de compensation adaptatif est configuré pour filtrer un signal sur le canal de compensation respectif de sorte qu'un signal de sortie de compensation soit fourni pour compenser un signal de sortie de microphone pour un signal sortant des haut-parleurs,
    des moyens de prétraitement (110) pour prétraiter les signaux d'entrée de haut-parleur sur les canaux de compensation, les moyens de prétraitement étant configurés pour déterminer une valeur de corrélation des signaux d'entrée de haut-parleurs pour les deux haut-parleurs en fonction d'un critère prédéterminé et pour désactiver un des filtres de compensation adaptatifs si la valeur de corrélation déterminée dépasse un seuil prédéterminé.

2. Système de compensation d'écho multicanal selon la revendication 1, dans lequel les moyens de prétraitement sont configurés pour fournir une combinaison linéaire, particulièrement une différence et / ou une somme, de signaux des deux canaux d'entrée de haut-parleurs à au moins un des filtres de compensation adaptatifs.

3. Système de compensation d'écho multicanal selon la revendication 1 ou 2, dans lequel les moyens de prétraitement sont configurés pour fournir une somme des signaux des deux canaux d'entrée de haut-parleurs à un premier des filtres de compensation adaptatifs et une différence des signaux des deux canaux d'entrée de haut-parleurs à un deuxième des filtres de compensation adaptatifs.

4. Système de compensation d'écho multicanal selon la revendication 3, dans lequel les moyens de prétraitement sont configurés pour désactiver le deuxième des filtres de compensation adaptatifs si la valeur de corrélation déterminée dépasse le seuil prédéterminé.

5. Système de compensation d'écho multicanal selon l'une des revendications précédentes, dans lequel les moyens de prétraitement sont configurés pour déterminer une valeur de corrélation conformément à un critère prédéterminé basé sur la puissance de signal d'un signal, en particulier, représentant la différence et / ou la somme des signaux des deux canaux d'entrée de haut-parleurs.

6. Système de compensation d'écho multicanal selon l'une des revendications précédentes, dans lequel la valeur de corrélation est déterminée de manière récursive.

7. Système de compensation d'écho multicanal selon l'une des revendications précédentes, dans lequel chaque filtre de compensation adaptatif est configuré de sorte qu'une adaptation du filtre de compensation adaptatif ne soit pas effectuée si le filtre de compensation adaptatif est désactivé.

8. Système de compensation d'écho multicanal selon l'une des revendications précédentes, dans lequel les moyens de prétraitement comprennent:

    deux entrées, chaque entrée étant connectée à un canal d'entrée de haut-parleur respectif,
    deux sorties, chaque sortie étant connectée à un filtre de compensation adaptatif respectif,
    un premier trajet de signal connectant la première entrée et la première sortie et un deuxième trajet de signal connectant la deuxième entrée et la deuxième sortie,
    des moyens de soustraction sur le premier trajet de signal et des moyens d'addition sur le deuxième trajet de signal,
    un troisième trajet de signal connectant la première entrée et les moyens d'addition de sorte qu'un signal sur le premier trajet de signal et un signal sur le deuxième trajet de signal soient additionnés pour obtenir un signal d'addition,

et un quatrième trajet de signal connectant la deuxième entrée et les moyens de soustraction de sorte qu'un signal sur le premier trajet de signal et un signal sur le deuxième trajet de signal soient soustraits l'un de l'autre pour obtenir un signal de soustraction.

9. Système de compensation d'écho multicanal selon la revendication 8, dans lequel les moyens de prétraitement comprennent des moyens de multiplication sur le premier et / ou le deuxième trajet de signal pour multiplier un signal sur le premier et / ou le deuxième trajet de signal par un coefficient de pondération, en particulier, pour multiplier le signal de soustraction et le signal d'addition par un coefficient de pondération commun.

10. Système de compensation d'écho multicanal selon la revendication 8 ou 9, dans lequel les moyens de prétraitement comprennent:

un premier filtre de prétraitement adaptatif sur le troisième trajet de signal, dont l'adaptation est basée sur la différence entre les signaux sur les deuxième et troisième trajets de signaux,
un deuxième filtre de prétraitement adaptatif sur le quatrième trajet de signal, dont l'adaptation est basée sur la différence entre les signaux sur les premier et quatrième trajets de signaux.

11. Système de compensation d'écho multicanal selon la revendication 10, dans lequel les filtres de compensation adaptatifs et les filtres de prétraitement adaptatifs sont configurés de sorte que l'adaptation des filtres de prétraitement soit effectuée plus lentement que l'adaptation des filtres de compensation.

12. Système de compensation d'écho multicanal selon la revendication 11, dans lequel les incréments d'adaptation des filtres de compensation sont supérieurs aux incréments d'adaptation des filtres de prétraitement.

13. Système de compensation d'écho multicanal selon l'une des revendications 10 à 12, dans lequel les moyens de prétraitement comprennent des moyens de retard sur les premier et deuxième trajets de signaux, respectivement, chaque moyen de retard étant configuré pour retarder les signaux sur les premier et deuxième trajets de signaux avant leur arrivée aux moyens d'addition et aux moyens de soustraction, respectivement.

14. Système de compensation d'écho multicanal selon la revendication 13, dans lequel le retard des moyens de retard est sélectionné de sorte qu'il corresponde à environ la moitié de la longueur d'un filtre de prétraitement adaptatif correspondant.

15. Système de compensation d'écho multicanal selon l'une des revendications précédentes, comprenant des moyens d'addition qui sont prévus entre les filtres de compensation adaptatifs et le canal de sortie de microphone et qui sont configurés pour additionner les signaux sortant des filtres de compensation adaptatifs.

16. Système de compensation d'écho multicanal selon l'une des revendications précédentes, dans lequel ledit au moins un microphone est configuré en tant que réseau d'au moins deux microphones connectés à des moyens de formation de faisceau sur le canal de sortie de microphone.

17. Procédé pour compenser des échos dans un système multicanal, le système multicanal comprenant deux haut-parleurs, chaque haut-parleur étant connecté à un canal d'entrée de haut-parleur (111, 112) pour fournir un signal d'entrée de haut-parleur à délivrer par le haut-parleur, au moins un microphone (101) pour acquérir un signal sortant des haut-parleurs, ledit au moins un microphone (101) étant connecté à un canal de sortie de microphone (103), un canal de compensation (113, 114) pour chaque canal d'entrée de haut-parleur, chaque canal de compensation connectant un canal d'entrée de haut-parleur respectif et le canal de sortie de microphone, un filtre de compensation adaptatif (105, 106) pour chaque canal de compensation, dans lequel chaque filtre de compensation adaptatif (105, 106) est configuré pour filtrer un signal sur le canal de compensation respectif de sorte qu'un signal de sortie de compensation soit fourni pour compenser un signal de sortie de microphone pour un signal sortant des haut-parleurs, le procédé comprenant les étapes consistant à:

recevoir des signaux d'entrée de haut-parleurs, dans lequel chaque signal d'entrée de haut-parleur est reçu sur un canal de compensation,
prétraiter (110) les signaux d'entrée de haut-parleurs sur les canaux de compensation, l'étape de prétraitement comprenant la détermination d'une valeur de corrélation de deux signaux de haut-parleurs pour les deux haut-parleurs conformément à un critère prédéterminé et la désactivation d'un des filtres de compensation adaptatifs si la valeur de corrélation déterminée dépasse un seuil prédéterminé.

**18.** Procédé selon la revendication 17, dans lequel l'étape de prétraitement comprend la fourniture d'une combinaison linéaire, particulièrement une différence et / ou une somme, de signaux des deux canaux d'entrée de haut-parleurs à au moins un des filtres de compensation adaptatifs.

**19.** Procédé selon la revendication 17 ou 18, dans lequel l'étape de prétraitement comprend la fourniture d'une somme des signaux des premier et deuxième canaux d'entrée de haut-parleurs à un premier des filtres de compensation adaptatifs et d'une différence des signaux des premier et deuxième canaux d'entrée de haut-parleurs à un deuxième des filtres de compensation adaptatifs.

**20.** Procédé selon la revendication 19, dans lequel l'étape de prétraitement comprend la désactivation du deuxième des filtres de compensation adaptatifs si la valeur de corrélation déterminée dépasse le seuil prédéterminé.

**21.** Procédé selon l'une des revendications 17 à 20, dans lequel l'étape de prétraitement comprend la détermination d'une valeur de corrélation conformément à un critère prédéterminé basé sur la puissance de signal d'un signal, en particulier, représentant la différence et / ou la somme des signaux des deux canaux d'entrée de haut-parleurs.

**22.** Procédé selon l'une des revendications 17 à 21, dans lequel la valeur de corrélation est déterminée de manière récursive.

**23.** Procédé selon l'une des revendications 17 à 22, dans lequel l'étape de prétraitement comprend l'addition des signaux d'entrée de haut-parleurs des deux signaux d'entrée de compensation pour obtenir un signal d'addition et la soustraction des signaux d'entrée de haut-parleurs des deux signaux d'entrée de compensation pour obtenir un signal de soustraction.

**24.** Procédé selon la revendication 23, dans lequel l'étape de prétraitement comprend la multiplication du signal d'addition et du signal de soustraction par un coefficient de pondération, en particulier, par un coefficient de pondération commun.

**25.** Procédé selon la revendication 23 ou 24, dans lequel l'étape de prétraitement comprend les étapes consistant à:

filtrer de manière adaptative un signal de haut-parleur d'un premier canal d'entrée de haut-parleur avant qu'il ne soit additionné à un signal de haut-parleur d'un deuxième canal de haut-parleur, dans lequel l'adaptation est basée sur la différence entre les signaux de haut-parleurs des premier et deuxième canaux d'entrée de haut-parleurs, et
filtrer de manière adaptative un signal de haut-parleur d'un deuxième canal d'entrée de haut-parleur avant qu'il ne soit soustrait d'un signal de haut-parleur d'un premier canal de haut-parleur, dans lequel l'adaptation est basée sur la différence entre les signaux de haut-parleurs des premier et deuxième canaux d'entrée de haut-parleurs.

**26.** Procédé selon la revendication 25, dans lequel le filtrage adaptatif de l'étape de prétraitement est effectué plus lentement que l'adaptation des filtres de compensation adaptatifs.

**27.** Procédé selon la revendication 26, dans lequel les incréments d'adaptation des filtres de compensation sont choisis de manière à être supérieurs aux incréments d'adaptation du filtrage adaptatif de l'étape de prétraitement.

**28.** Procédé selon l'une des revendications 25 à 27, dans lequel l'étape de prétraitement comprend les étapes consistant à:

retarder un signal de haut-parleur d'un deuxième canal d'entrée de haut-parleur avant qu'il ne soit additionné à un signal de haut-parleur filtré de manière adaptative d'un premier canal d'entrée de haut-parleur,
retarder un signal de haut-parleur d'un premier canal d'entrée de haut-parleur avant qu'il ne soit soustrait d'un signal de haut-parleur filtré de manière adaptative d'un deuxième canal d'entrée de haut-parleur de celui-ci.

**29.** Procédé selon la revendication 28, dans lequel le retard est sélectionné de sorte qu'il corresponde à environ la moitié de la longueur d'un filtre correspondant pour un filtrage adaptatif à l'étape de prétraitement.

**30.** Procédé selon l'une des revendications 17 à 29, comprenant l'étape consistant à additionner les signaux sortant des filtres de compensation adaptatifs.

**31.** Produit-programme informatique comprenant un ou plusieurs supports pouvant être lus par un ordinateur comportant des instructions exécutables par un ordinateur adapté pour effectuer toutes les étapes du procédé selon l'une des revendications 17 à 30 lorsqu'il est exécuté sur un ordinateur.

FIG. 1

Fig. 2

Fig. 3

Fig. 4

FIG. 5

FIG. 6
(prior art)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6738480 B1

**Non-patent literature cited in the description**

- **J. BENESTY ; T. GÄNSLER ; D. R. MORGAN ; M. M. SONDHI ; S. L. GAY.** Advances in Network and Acoustic Echo Cancellation. Springer Verlag, 2001

- **A. SUGIYAMA ; Y. JONCOUR ; A. HIRANO.** A Stereo Echo Canceller with Correct Echo-Path Identification Based on an Input-Sliding Technique. *IEEE Transactions on Signal Processing,* 2001, vol. 49 (1), 2577-2587